# EUROPÄISCHE PATENTANMELDUNG

(11) **EP 2 343 611 A1**
(43) Veröffentlichungstag der Anmeldung: **13.07.2011**
(21) Anmeldenummer: 10000076.9
(22) Anmeldetag: 07.01.2010
(51) Int. Cl.: G05B 19/042

(54) **Verfahren zur rechnergestützten Erzeugung eines ausführbaren Steuerungsprogramms und diesbezügliche Konfigurationseinrichtung**

(71) Anmelder: dspace digital signal processing and control engineering GmbH, 33102 Paderborn (DE)
(72) Erfinder: Kronmüller, Martin Dr.-Ing., 33154 Salzkotten (DE); Rühl, Martin Dipl.- Ing., 33184 Altenbeken (DE); Naundorf, Holger Dr. rer. nat., 33104 Paderborn (DE); Sunder, Henrik Dipl.- Math., 33129 Delbrück (DE); Haupt, Hagen Dr.-Ing., 33184 Altenbeken (DE)
(74) Vertreter: Gesthuysen, von Rohr & Eggert

(57) **Zusammenfassung**

Dargestellt und beschrieben ist ein Verfahren zur rechnergestützten Erzeugung mindestens eines Teils eines ausführbaren Steuerungsprogramms (1) zur Steuerung eines Steuerungssystems (2), wobei das Steuerungssystem (2) mindestens eine elektronische Rechnereinheit (3) und mindestens ein der Rechnereinheit (3) zugeordnetes I/O-Gerät (4) aufweist, wobei das I/O-Gerät (4) Hardwarefunktionalitäten (5a, 5b, 5c, 5d, 5e) umfasst und das Steuerungssystem (2) über das I/O-Gerät (4) zum Anschluss an ein externes Gerät (6) mit einer externen I/O-Schnittstelle (7) geeignet ist.

Mit dem behandelten Verfahren ist es möglich, die Konfiguration der Verbindung zwischen dem Steuerungssystem und dem anzuschließenden externen Gerät zu vereinfachen und die Fehlerhäufigkeit bei der Konfiguration der betreffenden Schnittstelle und damit bei dem auf Grundlage der Konfiguration der Schnittstelle erzeugten ausführbaren Steuerungsprogramm zu reduzieren, indem die Anschlüsse (8) und die Eigenschaften (9) der Anschlüsse (8) der externen I/O-Schnittstelle (7) rechnergestützt zumindest teilweise in einer Datenbasis spezifiziert werden, die Anschlüsse (8) der externen I/O-Schnittstelle (7) rechnergestützt, insbesondere in einem Extern-Konfigurationsfeld (10), auswählbar angezeigt werden, wenigstens ein, insbesondere im Extern-Konfigurationsfeld (10) angezeigter, Anschluss (8) der externen I/O-Schnittstelle (7) ausgewählt und einer ebenfalls rechnergestützt insbesondere in einem Funktionskonfigurationsfeld (11) angezeigten Hardwarefunktionalität (5) des I/O-Geräts (4) des Steuerungssystems (2) zugeordnet wird, wobei nach Auswahl eines Anschlusses (8) der externen I/O-Schnittstelle (7) rechnergestützt nur solche Hardwarefunktionalitäten (5a, ..., 5e) des I/O-Geräts (4) auswählbar angezeigt werden, die funktional widerspruchsfrei mit der gespeicherten Spezifikation der Anschlüsse (8) und der Eigenschaften (9) der Anschlüsse (8) der externen I/O-Schnittstelle (7) des externen Geräts (4) vereinbar sind.

## Beschreibung

Die Erfindung betrifft ein Verfahren zur rechnergestützten Erzeugung mindestens eines Teils eines ausführbaren Steuerungsprogramms zur Steuerung eines Steuerungssystems, wobei das Steuerungssystem mindestens eine elektronische Rechnereinheit und mindestens ein der Rechnereinheit zugeordnetes I/O-Gerät aufweist, wobei das I/O-Gerät Hardwarefünktionalitäten umfasst und das Steuerungssystem über das I/O-Gerät zum Anschluss an ein externes Gerät mit einer externen I/O-Schnittstelle geeignet ist. Darüber hinaus betrifft die Erfindung auch eine Konfigurationseinrichtung zur Konfiguration eines Steuerungssystems zwecks rechnergestützter Erzeugung mindestens eines Teils eines ausführbaren Steuerungsprogramms zur Steuerung des Steuerungssystems, wobei diese Konfigurationseinrichtung mindestens eine Anzeigevorrichtung, mindestens eine Eingabevorrichtung und mindestens eine Speichervorrichtung zur Speicherung einer Datenbasis aufweist.

Derartige Verfahren und Konfigurationseinrichtungen zur Durchführung solcher Verfahren sind aus dem Stand der Technik seit einiger Zeit bekannt (z. B. "Real-Time Interface (RTI and RTI-MP) Implementation Guide; Release 6.5", dSPACE Gmbh, Dezember 2009) und sie werden häufig im Bereich der Steuergeräteentwicklung, der Steuergeräteprogrammierung und des Steuergerätetests verwendet. Typische Szenarien für die Anwendung derartiger Verfahren sind beispielsweise das Rapid-Control-Prototyping und Hardware-in-the-Loop-Simulationen.

Beim Rapid-Control-Prototyping stellt ein Steuergerät im weitesten Sinne - ein Entwicklungs-Steuergerät, ein Prototyping-Hardwaresystem oder aber auch ein Seriensteuergerät - das Steuerungssystem dar und umfasst dann selbstverständlich eine elektronische Rechnereinheit und ein dieser Rechnereinheit zugeordnetes I/O-Gerät, wobei dieses I/O-Gerät nicht eine separate Geräteeinheit darstellen muss, sondern insgesamt zusammen mit der Rechnereinheit ein gerätetechnisch einheitliches Steuerungssystem bildet. Das I/O-Gerät des Steuerungssystems, also die I/O-Schnittstelle des Steuergeräts, weist üblicherweise eine Vielzahl von Hardwarefunktionalitäten auf, wie zum Beispiel digitale und analoge Eingänge, Analog/Digital- und Digital/AnalogWandler, Anschlüsse zur Ausgabe von Leistungssignalen, Schnittstellen, die bestimmte Kommunikations-Protokolle beherrschen oder beispielsweise Diagnoseschnittstellen.

Im Fall des Rapid-Control-Prototyping wird dann das Steuerungssystem in Form des Steuergeräts mit einem technisch-physikalischen Prozess verbunden. Das externe Gerät wird hier gebildet durch die Sensoren und Aktuatoren des Prozesses, die ihrerseits eine externe I/O-Schnittstelle aufweisen, über die sie - und damit mittelbar der technisch-physikalische Prozess - mit dem I/O-Gerät des Steuerungssystems verbindbar sind.

Im Fall der Hardware-in-the-Loop-Simulation ist das Steuerungssystem ein leistungsfähiger Simulationsrechner - elektronische Rechnereinheit - mit angeschlossenen I/O-Modulen - I/O-Gerät - und das externe Gerät wird durch ein Steuergerät gebildet, das im Rahmen der HIL-Simulation getestet werden soll, wobei die Umgebung des Steuergeräts durch das Steuerungssystem - HIL-Simulator - nachgebildet wird.

Welches der exemplarisch dargestellten Anwendungsbeispiele vorliegend realisiert wird, ist nicht entscheidend. Entscheidend ist die Tatsache, dass eine erhebliche Anzahl von Verbindungen zwischen Steuerungssystem und externem Gerät bzw. der externen I/O-Schnittstelle des externen Geräts eingerichtet und konfiguriert werden müssen, was einen erheblichen Aufwand bedeutet und aufgrund der Komplexität derartiger Schnittstellen eine erhebliche Fehlerquelle im Entwicklungsprozess darstellen kann.

Erschwerend kommt hinzu, dass jedem Anschluss eines externen Gerätes bzw. der externen I/O-Schnittstelle im Stand der Technik praktisch beliebige Hardwarefunktionalitäten des I/O-Geräts zugeordnet werden können, was allein den Auswahlprozess sehr unübersichtlich, mühselig und fehlerträchtig macht und eine genaue Kenntnis dessen voraussetzt, was einerseits an externen I/O-Schnittstellen auf Seiten des externen Geräts vorliegt, und welche Anschlüsse andererseits beim I/O-Gerät auf Seiten des Steuerungssystems vorliegen.

Fehler, die bei der Konfiguration der I/O-Schnittstelle zwischen Steuerungssystem und externem Gerät gemacht werden, wirken sich unmittelbar auch in dem Steuerungsprogramm aus, das verfahrensgemäß - jedenfalls auch - aus diesen die I/O-Konfiguration betreffenden Angaben automatisch erzeugt wird. Das Steuerungsprogramm steuert dann das Steuerungssystem, um in geplanter Weise, üblicherweise in Echtzeit, das externe Gerät mit dem Steuerungssystem zu beeinflussen.

Es ist daher Aufgabe der Erfindung, ein solches Verfahren - und eine diesbezügliche Konfigurationseinrichtung - anzugeben, das die Konfiguration der Verbindung zwischen dem Steuerungssystem und dem anzuschließenden externen Gerät vereinfacht und die Fehlerhäufigkeit bei der Konfiguration der betreffenden Schnittstelle und damit bei dem auf Grundlage der Konfiguration der Schnittstelle erzeugten ausführbaren Steuerungsprogramm reduziert.

Die aufgezeigte Aufgabe ist erfindungsgemäß zunächst und im Wesentlichen bei dem in Rede stehenden Verfahren dadurch gelöst, dass die Anschlüsse und die Eigenschaften der Anschlüsse der externen I/O-Schnittstelle rechnergestützt zumindest teilweise in einer Datenbasis spezifiziert werden, dass die Anschlüsse der externen I/O-Schnittstelle rechnergestützt, insbesondere in einem Extern-Konfigurationsfeld, auswählbar angezeigt werden, dass wenigstens ein, insbesondere im Extern-Konfigurationsfeld angezeigter, Anschluss der externen I/O-Schnittstelle ausgewählt und mindestens einer ebenfalls rechnergestützt angezeigten Hardwarefunktionalität des I/O-Geräts des Steuerungssystems zugeordnet wird, wobei nach Auswahl eines Anschlusses der externen I/O-Schnittstelle rechnergestützt nur solche Hardwarefunktionalitäten des I/O-Geräts auswählbar angezeigt werden, die funktional widerspruchsfrei mit der gespeicherten Spezifikation der Anschlüsse und der Eigenschaften der Anschlüsse der externen I/O-Schnittstelle des externen Geräts vereinbar sind.

Durch das erfindungsgemäße Verfahren wird auf ganz systematische und sichere Art und Weise eine Fehlkonfiguration der Schnittstelle zwischen Steuerungssystem und externem Gerät dadurch vermieden, dass rechnergestützt dafür gesorgt wird, dass einem Anschluss der externen I/O-Schnittstelle nur eine solche Hardwarefunktionalität des Steuerungssystems bzw. des I/O-Geräts des Steuerungssystems zuordenbar ist, das funktional ohne Widerspruch zu dem ausgewählten Anschluss der externen I/O-Schnittstelle passt, wodurch logische Fehlkonfigurationen zwingend vermieden werden und damit auch von vornherein die Erzeugung solcher ausführbarer Steuerungsprogramme für das Steuerungssystem vermieden wird, die ein fehlerhaftes Ansprechen der externen I/O-Schnittstelle durch das Steuerungssystem implementieren.

"Funktional widerspruchsfrei" bedeutet in diesem Zusammenhang, dass beispielsweise bei Auswahl eines Anschlusses der externen I/O-Schnittstelle, der einen Signaleingang darstellt, nur solche Hardwarefunktionalitäten des I/O-Geräts zur Auswahl gestellt werden, die ein korrespondierendes Ausgangssignal bzw. überhaupt ein Ausgangssignal zur Verfügung stellen können. Gleiches gilt dann, wenn ein Anschluss der externen I/O-Schnittstelle als Ausgang spezifiziert ist, so dass dann als Hardwarefunktionalitäten nur solche zur Auswahl gestellt werden, die einen entsprechenden Eingang aufweisen. Andere Beispiele für funktionale Widerspruchsfreiheit sind die Bereitstellung einer Spannungs- bzw. Stromschnittstelle auf der Seite des I/O-Geräts bzw. der Hardwarefunktionalität des I/O-Geräts, wenn bei der externen I/O-Schnittstelle ein Spannungs- bzw. Stromanschluss spezifiziert worden ist. Entsprechendes gilt für analoge bzw. digitale Signale oder für die Vorgabe einer bestimmten Kurzschließbarkeit eines Anschlusses der externen I/O-Schnittstelle.

Neben diesen grundsätzlichen Spezifikationen der Anschlüsse der externen I/O-Schnittstelle sind auch weitergehende Angaben zur Spezifikation der Anschlüsse der externen I/O-Schnittstelle möglich. Darunter ist beispielsweise zu verstehen, die Angabe eines Spannungs- oder Strombereiches, wenn der entsprechende Anschluss schon als Anschluss für ein Spannungssignal bzw. ein Stromsignal spezifiziert worden ist. Als weitere ins Detail gehende Angabe bzw. Spezifikation einer externen I/O-Schnittstelle ist ein Signaltyp verwendbar, die Frequenz eines auszugebenden, zu erfassenden oder zu wandelnden Signals, das Puls-Pausenverhältnis/Tastverhältnis eines Signals oder beispielsweise auch ein Kommunikations-Protokoll, das an einem bestimmten Anschluss interpretiert bzw. bereitgestellt werden kann. Ebenso kann ein Anschluss der externen I/O-Schnittstelle des externen Geräts spezifiziert werden mit einem anzuschließenden variablen Widerstand (z.B. Temperaturfühler) oder mit einem definierten minimalen und maximalen Puls-Pausenverhältnis (duty cycle).

Wenn als Eigenschaft der Anschlüsse der externen I/O-Schnittstelle wenigstens eine dieser Eigenschaften spezifiziert wird, können auf Basis dieser Angabe korrespondierende, also funktional widerspruchsfreie entsprechende Hardwarefunktionalitäten des I/O-Geräts verfahrensgemäß zur Auswahl gestellt und dann selektiert werden. Dies ist nicht nur deshalb vorteilhaft, weil eine erhöhte Übersichtlichkeit bei der Konfiguration geschaffen wird, da nur eine kleine Auswahl von Hardwarefunktionalitäten aus der Gesamtzahl an überhaupt möglichen Hardwarefunktionalitäten zur Auswahl gestellt wird, sondern auch, weil dies zu einer erheblichen Verkürzung der Konfigurationszeit führt.

Gemäß einer weiteren vorteilhaften Ausgestaltung des erfindungsgemäßen Verfahrens ist vorgesehen, dass nach Auswahl einer der als auswählbar angezeigten Hardwarefunktionalitäten die ausgewählte Hardwarefunktionalität rechnergestützt in einem Funktionskonfigurationsfeld angezeigt wird. Durch die auf die Auswahl der angezeigten Hardwarefunktionalitäten folgende Anzeige der ausgewählten Hardwarefunktionalität ist es dem Verwender grundsätzlich möglich, sogleich eine Zuordnung von dem ursprünglich gewählten Anschluss der externen I/O-Schnittstelle zu einem korrespondierenden Anschluss der dann ebenfalls angezeigten Hardwarefunktionalität des I/O-Geräts vorzunehmen. In einer besonders vorteilhaften Ausgestaltung des Verfahrens wird der ausgewählte Anschluss der externen I/O-Schnittstelle automatisch einem eindeutigen, funktional widerspruchsfreien Anschluss der dann dargestellten Hardwarefunktionalität zugeordnet, ohne dass es dem weiteren Zutun des Verwenders bedürfte. Dies ist insbesondere dann vorteilhaft, wenn diese Zuordnung eindeutig möglich ist. In einer weiteren vorteilhaften Ausgestaltung der Erfindung werden bei mehreren möglichen funktional widerspruchsfreien Verbindungsmöglichkeiten zwischen dem Anschluss der externen I/O-Schnittstelle und der ausgewählten Hardwarefunktionalität alle möglichen Zuordnungen angezeigt und zur Wahl gestellt.

Ist einmal eine Zuordnung zwischen einem selektierten Anschluss der externen I/O-Schnittstelle des externen Geräts und einer ausgewählten Hardwarefunktionalität des I/O-Geräts vorgenommen, so lässt sich noch eine Vielzahl von weiteren Parametern angeben, um die ausgewählte Hardwarefunktionalität des I/O-Geräts vollständig zu parametrieren. Wenn beispielsweise ein digitaler Eingang der externen I/O-Schnittstelle einem digitalen Ausgang einer Hardwarefunktionalität des I/O-Geräts zugeordnet worden ist, dann besteht ein solcher weiterer Parameter in der Information, dass der Anschluss der externen I/O-Schnittstelle ein pulsweitenmoduliertes Signal erwartet, das Signal ein bestimmtes minimales und maximales Tastverhältnis aufweist, und dass es sich hier um ein TTL-Signal handelt. Eine vorteilhafte Weiterentwicklung des erfindungsgemäßen Verfahrens sieht vor, dass die zu einem selektierten Anschluss der externen I/O-Schnittstelle ausgewählte Hardwarefunktionalität automatisch unter Verwendung der in der Datenbasis hinterlegten Spezifikation des selektierten Anschlusses der externen I/O-Schnittstelle konfiguriert wird. Im vorliegenden Fall bedeutet dies, dass die ausgewählte Hardwarefunktionalität nicht nur ein digitales Ausgangssignal zur Verfügung stellt, sondern ein pulsweitenmoduliertes TTL-Signal, das das geforderte minimale Tastverhältnis nicht unterschreitet und das das geforderte maximale Tastverhältnis nicht überschreitet.

Bei einer besonders bevorzugten Ausgestaltung des erfindungsgemäßen Verfahrens ist vorgesehen, dass nach einer möglichen Änderung der Spezifikation der Anschlüsse und/oder der Eigenschaften der Anschlüsse der externen I/O-Schnittstelle bei bereits wenigstens einer vorhandenen Zuordnung eines Anschlusses der externen I/O-Schnittstelle zu einer Hardwarefunktionalität des I/O-Geräts die bereits vorhandene Zuordnung rechnergestützt auf Grundlage der in der Datenbasis hinterlegten geänderten Spezifikation auf funktionale Widerspruchsfreiheit hin untersucht wird und ermittelte Widersprüche angezeigt werden, bevorzugt ermittelte Widersprüche - sofern eindeutig möglich - zusammen mit einem Vorschlag zur Auflösung des Widerspruchs angezeigt werden, besonders bevorzugt - sofern eindeutig möglich - der ermittelte und funktionale Widerspruch automatisch durch eine Änderung der Parametrierung der Hardwarefunktionalität des I/O-Geräts aufgelöst wird

Das beschriebene Verfahren ist auf Grundlage eines vorhandenen Steuerungssystems mit einer vorhandenen Rechnereinheit, einem vorhandenen I/O-Gerät mit vorhandenen Hardwarefunktionalitäten und auf Grundlage eines vorhandenen externen Geräts mit einer vorhandenen externen I/O-Schnittstelle besonders zielgerichtet durchführbar, da sofort nur die überhaupt verfügbaren Anschlüsse und Eigenschaften der Anschlüsse der externen I/O-Schnittstelle des bekannten vorhandenen externen I/O-Geräts zur Wahl gestellt werden können, genauso wie lediglich die überhaupt nur verfügbaren Hardwarefunktionalitäten des vorhandenen, also bekannten I/O-Geräts; dies erleichtert insgesamt die Durchführung des Verfahrens. Zur Durchführung des Verfahrens ist es jedoch nicht erforderlich, dass das I/O-Gerät selbst oder das externe Gerät selbst physikalisch vorhanden sein muss. Vielmehr ist es gemäß einer bevorzugten Ausgestaltung des Verfahrens auch möglich, dass Informationen über die Hardwarefunktionalitäten des - einzusetzenden, aber nicht vorhandenen - I/O-Geräts und/oder Informationen über die Anschlüsse und die Eigenschaften der Anschlüsse der externen I/O-Schnittstelle des - einzusetzenden, aber physikalisch nicht vorhandenen - externen I/O-Geräts aus einer weiteren Datenbasis erhalten werden, ohne dass das I/O-Gerät des Steuerungssystems und/oder die externe I/O-Schnittstelle des externen Geräts selbst vorhanden sind.

In einer besonders bevorzugten Ausgestaltung des erfindungsgemäßen Verfahrens ist vorgesehen, dass nicht nur die I/O-Schnittstelle zwischen dem Steuerungssystem und dem externen Gerät konfiguriert wird, sondern darüber hinaus auch das mathematische Modell, mit dem die Funktionalität beschrieben wird, die das Steuerungssystem ausführen soll. Dazu werden in dem mathematischen Modell sogenannte I/O-Zugriffspunkte definiert, die Anzeigen, welche Signale über das I/O-Gerät des Steuerungssystems ausgegeben bzw. aufgenommen werden sollen. Bevorzugt wird mindestens ein I/O-Zugriffspunkt eines mathematischen Modells dargestellt und eine auswählte und dargestellte Hardwarefunktionalität des I/O-Geräts wird einem der dargestellten I/O-Zugriffspunkte des mathematischen Modells zugeordnet, so dass eine geschlossene Darstellung der Entwicklung möglich ist, vom abstrakten mathematischen Modell, das die grundsätzliche Funktionalität des Steuerungssystems beschreibt, über die I/O-Schnittstelle des I/O-Geräts des Steuerungssystems, bis hin zu dem an das Steuerungssystem anzuschließende externe Gerät.

Nach einer unabhängigen Lehre betrifft die Erfindung auch - wie eingangs angedeutet - eine Konfigurationseinrichtung zur Konfiguration eines Steuerungssystems zwecks rechnergestützter Erzeugung mindestens eines Teils eines ausführbaren Steuerungsprogramms zur Steuerung des Steuerungssystems, wobei das Steuerungssystem mindestens eine elektronische Rechnereinheit und mindestens ein der Rechnereinheit zugeordnetes I/O-Gerät aufweist, wobei das I/O-Gerät Hardwarefunktionalitäten umfasst und das Steuerungssystem über das I/O-Gerät zum Anschluss an ein externes Gerät mit einer externen I/O-Schnittstelle geeignet ist, wobei die Konfigurationseinrichtung mindestens eine Anzeigevorrichtung, mindestens eine Eingabevorrichtung und mindestens eine Speichervorrichtung zur Speicherung einer Datenbasis aufweist, wobei die Konfigurationseinrichtung insgesamt so ausgestaltet ist, dass mit ihr das vorbeschriebene erfindungsgemäße Verfahren - auch in den angesprochenen Weiterentwicklungen und Varianten - durchgeführt werden kann.

Im Einzelnen gibt es nun verschiedene Möglichkeiten, das erfindungsgemäße Verfahren und die erfindungsgemäße Konfigurationseinrichtung auszugestalten und weiterzubilden. Dazu wird verwiesen auf die den Patentansprüchen 1 und 8 nachgeordneten Patentansprüche und auf die Beschreibung bevorzugter Ausführungsbeispiele in Verbindung mit der Zeichnung. In der Zeichnung zeigen
- Fig. 1: die schematische Darstellung eines Steuerungssystems mit einem angeschlossenen externen I/O-Gerät,
- Fig. 2: beispielhaft die Spezifikation der Anschlüsse und der Eigenschaften der Anschlüsse einer externen I/O-Schnittstelle,
- Fig. 3: die Darstellung der externen I/O-Schnittstelle des externen I/O-Geräts,
- Fig. 4: die Zuordnung eines Anschlusses der externen I/O-Schnittstelle zu einer Hardwarefunktionalität des I/O-Geräts,

- Fig. 5: die Anzeige von funktional widerspruchsfreien Hardwarefunktionalitäten zu einem zuvor ausgewählten Anschluss der externen I/O-Schnittstelle,
- Fig. 6: die weitere Konfiguration einer ausgewählten Hardwarefunktionalität unter Verwendung einer in der Datenbasis hinterlegten Spezifikation,
- Fig. 7: die Prüfung auf funktionale Widerspruchsfreiheit von Verbindungen zwischen den Anschlüssen der externen I/O-Schnittstelle und den Hardwarefunktionalitäten eines I/O-Geräts und
- Fig. 8: die gleichzeitige Behandlung von Modell, I/O-Gerät und externem Gerät.

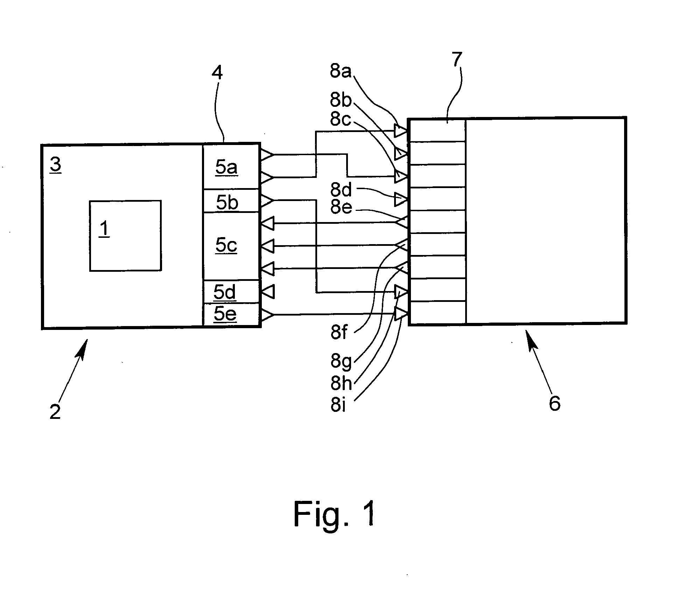

Fig. 1 stellt ganz grundsätzlich die Umgebung dar, die mit Hilfe des erfindungsgemäßen Verfahrens konfiguriert wird und die - zumindest teilweise - auf Grundlage der Konfiguration - und möglicherweise noch weiteren Angaben - programmiert und in bestimmungsgemäßer Weise betrieben wird. Dargestellt ist ein ausführbares Steuerungsprogramm 1, das zur Steuerung eines Steuerungssystems 2 dient, wobei das Steuerungssystem 2 mindestens eine elektronische Rechnereinheit 3 und mindestens ein der Rechnereinheit 3 zugeordnetes I/O-Gerät 4 aufweist. Das I/O-Gerät 4 umfasst eine Vielzahl von Hardwarefunktionalitäten 5a, 5b, 5c, 5d, 5e, so dass das Steuerungssystem 2 über das I/O-Gerät 4 zum Anschluss an ein externes Gerät 6 geeignet ist, wobei das externe Gerät 6 mit einer externen I/O-Schnittstelle 7 ausgestattet ist. Das Steuerungssystem 2 ist im vorliegenden Fall ein HIL-Simulator und bei dem externen Gerät 6 handelt es sich um ein zu testendes Steuergerät (Device Under Test). Es ist unmittelbar einleuchtend, dass es für die korrekte Beeinflussung des externen Geräts 6 durch das Steuerungssystem 2 notwendig ist, dass die I/O-Schnittstellen zwischen beiden Geräten aufeinander abgestimmt sind und eine aufeinander abgestimmte Konfiguration der Hardwarefunktionalitäten 5a, ..., 5e des I/O-Geräts 4 und der externen I/O-Schnittstelle 7 des externen Geräts 6 vorliegt.

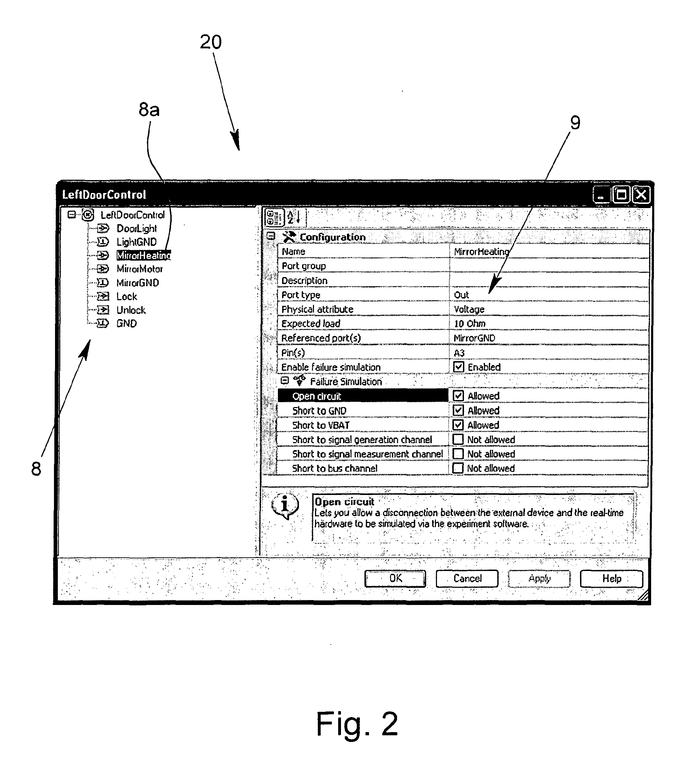

In den Fig. 2 bis 5 ist das Verfahren dargestellt, mit dem rechnergestützt zumindest ein Teil des ausführbaren Steuerungsprogramms 1 zur Steuerung des Steuerungssystems 2 erzeugt wird. Fig. 2 zeigt zunächst, dass in einem linken Feld in einer Baumstruktur die Anschlüsse 8 der externen I/O-Schnittstelle 7 angegeben sind und die Eigenschaften 9 der Anschlüsse 8 der externen I/O-Schnittstelle 7 rechnergestützt - dargestellt in den beiden rechten Feldern - in einer Datenbasis spezifiziert werden. Die Datenbasis ist als solche nicht dargestellt, ist aber in einem Computersystem, das das Verfahren implementiert, vorgesehen. Es ist zu erkennen, dass das externe Gerät 6 über Anschlüsse 8 verfügt, die zur Steuerung der linken Tür eines Fahrzeugs dienen und als "LeftDoorControl" bezeichnet sind. Bei den in Fig. 2 dargestellten Anschlüssen 8 und den Eigenschaften 9 der Anschlüsse 8 der externen I/O-Schnittstelle 7 handelt es sich selbstverständlich nicht um die in Fig. 1 dargestellten Anschlüsse 8 selbst, sondern nur um eine rechnergestützte Darstellung. Es ist in Fig. 2 zu erkennen, dass ein einziger Anschluss 8a - hier "Mirror Heating" eine Vielzahl von Eigenschaften 9 aufweisen kann. Bei Auswahl eines anderen Anschlusses 8 - beispielsweise "DoorLight" wird in entsprechender Weise verfahren.

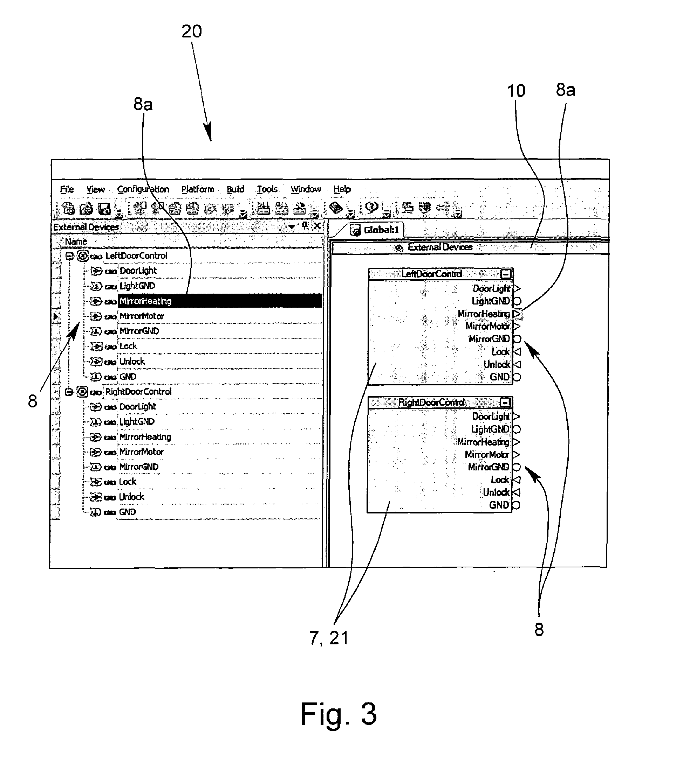

In Fig. 3 ist dargestellt, dass die Anschlüsse 8 der externen I/O-Schnittstelle 7 rechnergestützt, hier in einem Extern-Konfigurationsfeld 10, auswählbar angezeigt werden, wobei vorliegend der Anschluss 8a "Mirror Heating" ausgewählt ist.

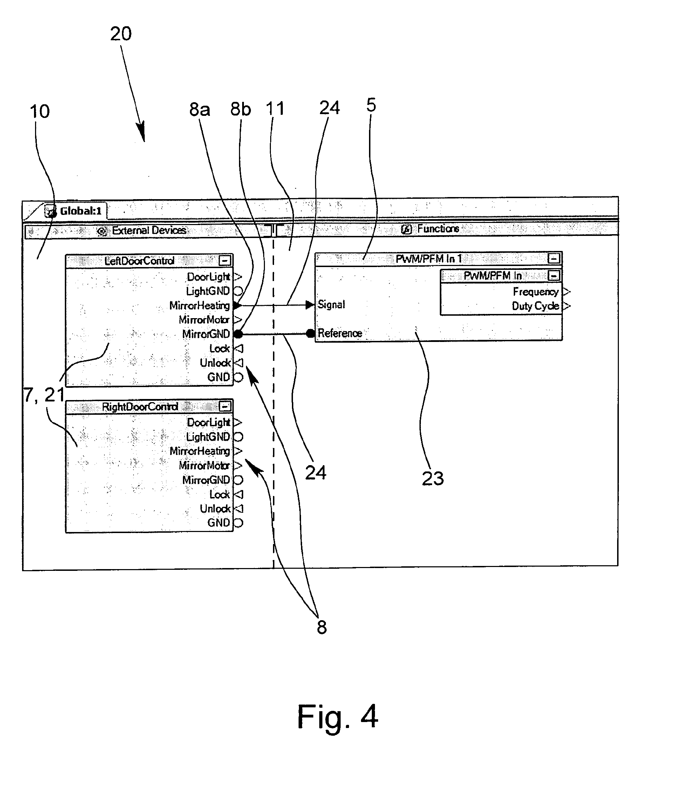

In Fig. 4 ist dargestellt, dass neben den Anschlüssen 8 der externen I/O-Schnittstelle 7 im Extern-Konfigurationsfeld 10 ebenfalls rechnergestützt angezeigt wird eine Hardwarefunktionalität 5 des I/O-Geräts 4, wobei die Darstellung hier in einem Funktionskonfigurationsfeld 11 erfolgt. In Fig. 4 sind zwei Anschlüsse 8a, 8b der externen I/O-Schnittstelle 7 ausgewählt und der Hardwarefunktionalität 5 zugeordnet.

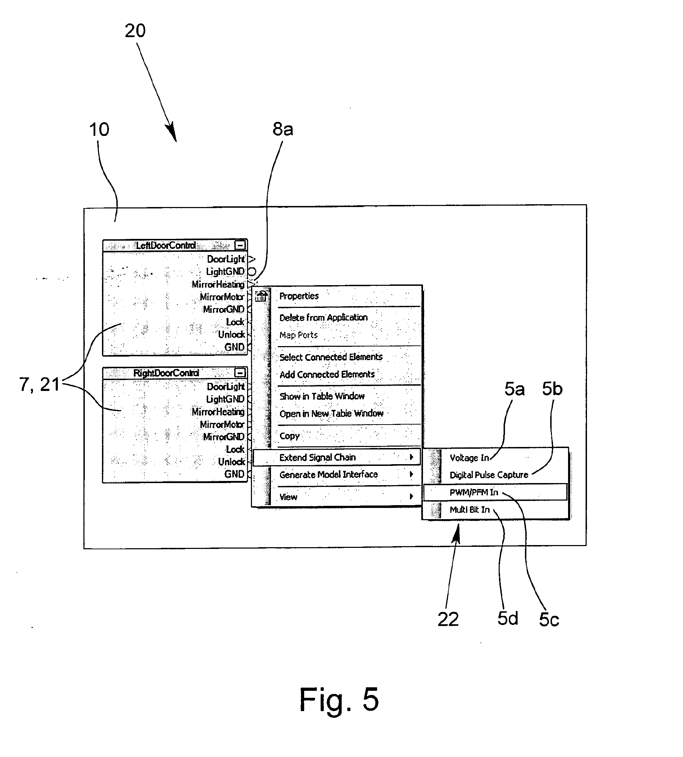

Besonders vorteilhaft ist die Eigenschaft des in Fig. 5 dargestellten Verfahrens, dass nach Auswahl des Anschlusses 8a der externen I/O-Schnittstelle 7 rechnergestützt nur solche Hardwarefunktionalitäten 5a, 5b, 5c, 5d des I/O-Geräts 4 auswählbar angezeigt werden, die funktional widerspruchsfrei mit der gespeicherten Spezifikation der Anschlüsse 8 und der Eigenschaft 9 der Anschlüsse 8 der externen I/O-Schnittstelle 7 des externen Geräts 6 vereinbar sind, hier die Hardwarefunktionalitäten "Voltage In", "Digital Pulse Capture", "PWM/PFM In" und "Multi Bit In". Wie in Fig. 5 zu erkennen ist, handelt es sich bei dem Anschluss 8a der externen I/O-Schnittstelle 7 um einen Ausgang, so dass in dem rechts dargestellten Auswahlmenü mit den Hardwarefunktionalitäten 5a, 5b, 5c, 5d des I/O-Geräts 4 nur solche Hardwarefunktionalitäten zur Auswahl gestellt werden, die einen korrespondierenden Eingang bereitstellen, was zweifellos auf die vier vorgenannten Hardwarefunktionalitäten "Voltage In" bis "Multi Bit In" zutrifft.

Bei der hier dargestellten Realisierung des Verfahrens ist die chronologische Abfolge der Durchführung des Verfahrens durch die Fig. 3, 5 und 4 gegeben, so dass die in Fig. 5 dargestellten Verfahrensschritte vor dem in Fig. 4 dargestellten Zustand der Konfiguration durchgeführt werden. Demnach ist hier vorgesehen, dass nach Auswahl der als auswählbar angezeigten Hardwarefunktionalität 5c "PWM/PFM In", die ausgewählte Hardwarefunktionalität 5c rechnergestützt in dem Funktionskonfigurationsfeld 11 gemäß Fig. 4 angezeigt wird, wobei hier sogar der ausgewählte Anschluss 8a der externen I/O-Schnittstelle 7 automatisch einem eindeutigen funktional widerspruchsfreien Anschluss der dargestellten Hardwarefunktionalität 5 "PWM/PFM In 1" zugeordnet wird.

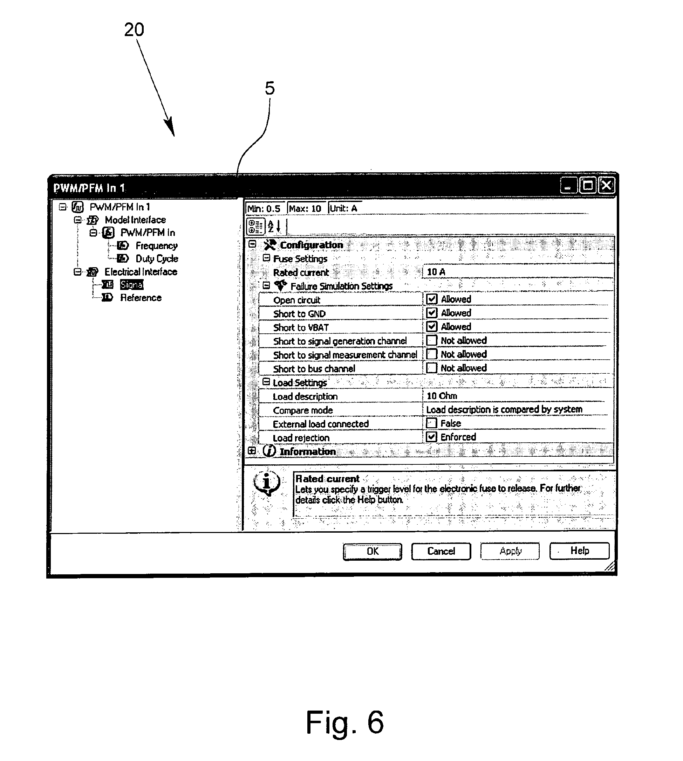

Fig. 6 zeigt, dass die zu dem selektierten Anschluss 8a "Mirror Heating" der externen I/O-Schnittstelle 7 ausgewählte Hardwarefunktionalität 5 "PWM/PFM In 1" automatisch unter Verwendung der in der Datenbasis hinterlegten Spezifikation des selektierten Anschlusses 8a der externen I/O-Schnittstelle 7 konfiguriert worden ist. So sind beispielsweise die Eigenschaften "Open Circuit", "Short to GND" und "Short to VBAT" automatisch gesetzt worden in gegenseitiger Übereinstimmung der verbundenen Anschlüsse.

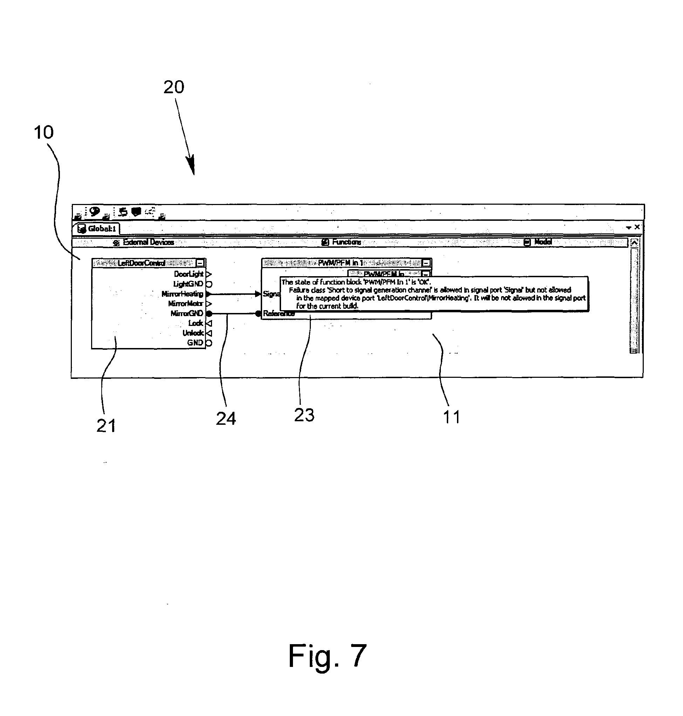

In Fig. 7 ist schließlich dargestellt, wie im vorliegenden Fall eine automatische Erkennung und Signalisierung von funktionalen Widersprüchen bzw. funktionaler Widerspruchsfreiheit realisiert ist. In dem dargestellten Fall ist die Eigenschaft "Short to signal generation channel" unterschiedlich gesetzt worden und zwar einerseits als Eigenschaft 9 des Anschlusses 8 der externen I/O-Schnittstelle 7 und andererseits als die Eigenschaft der Hardwarefunktionalität "PWM/PFM In 1". Diese Unstimmigkeit zwischen den Einstellungen ist hier erkannt worden und wird angezeigt. Das Verfahren wird im vorliegenden Fall auch so durchgerührt, dass nach einer Änderung der Spezifikation der Anschlüsse 8 und/oder der Eigenschaften 9 der Anschlüsse 8 der externen I/O-Schnittstelle 7 bei bereits wenigstens einer vorhandenen Zuordnung eines Anschlusses 8 der externen I/O-Schnittstelle 7 zu einer Hardwarefunktionalität 5 des I/O-Geräts 4 die bereits vorhandene Zuordnung rechnergestützt auf Grundlage der in der Datenbasis hinterlegten geänderten Spezifikation auf funktionale Widerspruchsfreiheit hin untersucht wird und auch dann ermittelte Widersprüche angezeigt werden.

Insbesondere durch die rechnergestützte auswählbare Anzeige nur solcher Hardwarefunktionalitäten 5a, ..., 5e des I/O-Geräts 4, die funktional widerspruchsfrei mit der gespeicherten Spezifikation der Anschlüsse 8 und der Eigenschaften 9 der Anschlüsse 8 der externen I/O-Schnittstelle 7 des externen Geräts 6 vereinbar sind und auch durch die automatische Konfiguration einer ausgewählten Hardwarefunktionalität 5 auf Basis der in der Datenbasis hinterlegten Spezifikation des zuvor selektierten Anschlusses 8 der externen I/O-Schnittstelle 7 wird erreicht, dass die letztlich auf der Konfiguration fußende Erzeugung mindestens eines Teils des ausführbaren Steuerungsprogramms 1 zur Steuerung des Steuerungssystems 2 erheblich fehlerfreier und schneller erfolgen kann, als dies zuvor möglich gewesen ist.

Das allgemeine Verfahren zur rechnergestützten Erzeugung mindestens eines Teils - nämlich zumindest des die I/O-Schnittstelle betreffenden Teils - des ausführbaren Steuerungsprogramms 1 zur Steuerung des Steuerungssystems 2 ist in den Fig. 2 bis 8 durchgeführt mit einer zumindest teilweise dargestellten Konfigurationseinrichtung 20 zur Konfiguration des Steuerungssystems 2 zwecks rechnergestützter Erzeugung des vorgenannten Teils des ausführbaren Steuerungsprogramms 1 zur Steuerung des Steuerungssystems 2, wobei die Konfigurationseinrichtung 20 als typischer Arbeitsplatzrechner ausgestaltet ist, nämlich - hier nicht dargestellt - eine Anzeigevorrichtung, eine Eingabevorrichtung und eine Speichervorrichtung zur Speicherung einer Datenbasis aufweist. Mittels der als Bildschirm ausgestalteten Anzeigevorrichtung werden die Anschlüsse 8 der externen I/O-Schnittstelle 7 rechnergestützt in dem Extern-Konfigurationsfeld 10, vorliegend innerhalb eines Programmfensters, auswählbar angezeigt, speziell durch Blöcke 21 nach Art eines Blockschaltbildes, wobei die Blöcke 21 nebeneinander in einer Reihe angeordnet sind, hier vertikal ausgerichtet nebeneinander angeordnet sind, wie in den Fig. 3, 4 und 5 zu sehen ist. An den Blöcken 21 sind die Anschlüsse 8 durch Dreiecksymbole dargestellt, die - sofern vorhanden - die Signalrichtung angeben.

Die Auswahl eines Anschlusses 8 bzw. ganz konkret in den Fig. 3 und 5 die Auswahl des Anschlusses 8a der externen I/O-Schnittstelle 7 erfolgt durch die Eingabevorrichtung, hier durch einen Mauszeiger. Diejenigen Hardwarefunktionalitäten 5, die funktional widerspruchsfrei mit der gespeicherten Spezifikation der Anschlüsse 8 und der Eigenschaften 9 der Anschlüsse 8 der externen I/O-Schnittstelle 7 vereinbar sind, werden dann in einem Auswahlfeld 22 (Fig. 5) zur Auswahl mit der Eingabevorrichtung auswählbar angezeigt, wobei das Auswahlfeld 22 hier als Listenfeld ausgestaltet ist.

Die mittels der Anzeigevorrichtung ausgewählte Hardwarefunktionalität 5c des I/O-Geräts 4 wird vorliegend in einem Funktionskonfigurationsfeld 11 angezeigt (Fig. 4, 7 und 8), das als benachbarte Sektion innerhalb des gleichen Programmfensters angezeigt wird, in dem auch schon das Extern-Konfigurationsfeld 10 dargestellt ist. Die Hardwarefunktionalitäten 5 werden hier ebenfalls durch Blöcke 23 nach Art eines Blockschaltbildes dargestellt, wobei die Blöcke 23 bevorzugt wiederum nebeneinander in einer Reihe angeordnet werden sollen, nämlich parallel zu den Anschlüssen 8 der externen I/O-Schnittstelle 7. Dies ermöglicht eine sehr einfache Zuordenbarkeit von Anschlüssen 8 der externen I/O-Schnittstelle 7 zu korrespondierenden Anschlüssen der Hardwarefunktionalitäten 5.

Wie in Fig. 4 zu erkennen ist, sind die Anschlüsse 8a, 8b der externen I/O-Schnittstelle 7 im Extern-Konfigurationsfeld 10 der Hardwarefunktionalität 5 des I/O-Geräts 4 des Steuerungssystems 2 im Funktionskonfigurationsfeld 11 durch ebenfalls ein graphisches Zuordnungsmittel zugeordnet, nämlich durch eine Signallinien 24.

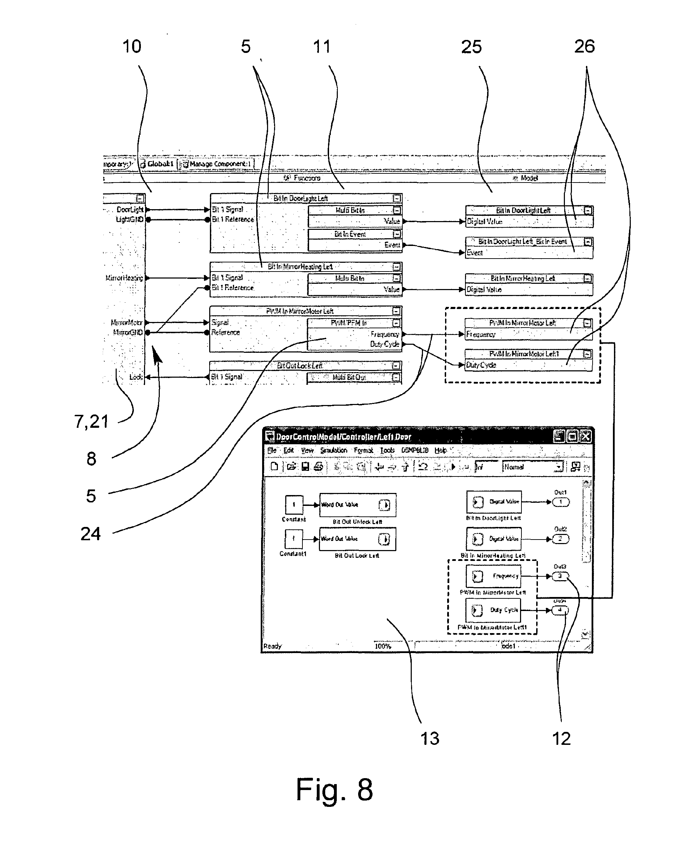

Die Konfigurationseinrichtung 20 zeichnet sich dadurch aus, dass nicht nur das externe Gerät 6 bzw. die Anschlüsse 8 der externen I/O-Schnittstelle 7 des externen Geräts 6 darstellbar sind - vorliegend im Extern-Konfigurationsfeld 10 - und die Hardwarefunktionalitäten 5 des I/O-Geräts 4 des Steuerungssystems 2 darstellbar sind - vorliegend im Funktionskonfigurationsfeld 11 -, wie in Fig. 8 dargestellt, sondern auch mittels der Anzeigevorrichtung wenigstens ein I/O-Zugriffspunkt 12 eines mathematischen Modells 13 in einem Modellkonfigurationsfeld 25 dargestellt werden kann, vorliegend durch Blöcke 26 nach Art eines Blockschaltbildes, wodurch die Blöcke 26 ebenfalls nebeneinander in einer Reihe angeordnet sind. Hier sind die Blöcke 26 parallel zu den ausgewählten und dargestellten Hardwarefunktionalitäten 5 des I/O-Geräts 4 angeordnet, was den Vorteil mit sich bringt, dass die gegenseitige Zuordenbarkeit vereinfacht ist. Damit erlaubt die Konfigurationseinrichtung 20im Ergebnis eine durchgängige Sicht des Entwicklungsprozesses von dem abstrakten mathematischen Modell 13, in dem die umzusetzende Funktionalität des Steuerungssystems 2 abgebildet ist, über die Hardwarefunktionalitäten 5 des Steuerungssystems 2 bis hin zu dem externen Gerät 6, das durch das Steuerungssystem 2 angesprochen wird. In Fig. 8 ist ohne weiteres zu erkennen, dass ein in dem Modellkonfigurationsfeld 25 dargestellter I/O-Zugriffspunkt 12 in Form des Blocks 26 des mathematischern Modells 13 einer ausgewählten und in dem Funktionskonfigurationsfeld 11 dargestellten Hardwarefunktionalität 5 des I/O-Geräts 4 zuordenbar ist und zugeordnet ist, vorliegend nämlich durch graphische Zuordnungsmittel, die hier in Form von Signallinien 24 realisiert sind.

## Patentansprüche

1. Verfahren zur rechnergestützten Erzeugung mindestens eines Teils eines ausführbaren Steuerungsprogramms (1) zur Steuerung eines Steuerungssystems (2), wobei das Steuerungssystem (2) mindestens eine elektronische Rechnereinheit (3) und mindestens ein der Rechnereinheit (3) zugeordnetes I/O-Gerät (4) aufweist, wobei das I/O-Gerät (4) Hardwarefunktionalitäten (5a, 5b, 5c, 5d, 5e) umfasst und das Steuerungssystem (2) über das I/O-Gerät (4) zum Anschluss an ein externes Gerät (6) mit einer externen I/O-Schnittstelle (7) geeignet ist,
**dadurch gekennzeichnet,**
**dass** die Anschlüsse (8) und die Eigenschaften (9) der Anschlüsse (8) der externen I/O-Schnittstelle (7) rechnergestützt zumindest teilweise in einer Datenbasis spezifiziert werden,
**dass** die Anschlüsse (8) der externen I/O-Schnittstelle (7) rechnergestützt, insbesondere in einem Extern-Konfigurationsfeld (10), auswählbar angezeigt werden,
**dass** wenigstens ein, insbesondere im Extern-Konfigurationsfeld (10) angezeigter, Anschluss (8) der externen I/O-Schnittstelle (7) ausgewählt und einer ebenfalls rechnergestützt insbesondere in einem Funktionskonfigurationsfeld (11) angezeigten Hardwarefunktionalität (5) des I/O-Geräts (4) des Steuerungssystems (2) zugeordnet wird,
wobei nach Auswahl eines Anschlusses (8) der externen I/O-Schnittstelle (7) rechnergestützt nur solche Hardwarefunktionalitäten (5a, ..., 5e) des I/O-Geräts (4) auswählbar angezeigt werden, die funktional widerspruchsfrei mit der gespeicherten Spezifikation der Anschlüsse (8) und der Eigenschaften (9) der Anschlüsse (8) der externen I/O-Schnittstelle (7) des externen Geräts (4) vereinbar sind.

2. Verfahren nach Anspruch 1, **dadurch gekennzeichnet, dass** als Eigenschaft (9) der Anschlüsse der externen I/O-Schnittstelle (7) wenigstens eine der folgenden Eigenschaften (9) spezifiziert wird: Eingang/Ausgang, Spannung/Strom, analog/digital, Spannungsbereich, Strombereich, Kurzschließbarkeit gegen Spannung/Masse, Signaltyp, Frequenz, Pulspausenverhältnis und Protokoll.

3. Verfahren nach Anspruch 1 oder 2, **dadurch gekennzeichnet, dass** nach Auswahl einer der als auswählbar angezeigten Hardwarefunktionalitäten (5a, ..., 5e), die ausgewählte Hardwarefunktionalität (5) rechnergestützt in dem Funktionskonfigurationsfeld (11) angezeigt wird, insbesondere der ausgewählte Anschluss (8) der externen I/O-Schnittstelle (7) automatisch einem eindeutigen funktional widerspruchsfreien Anschluss der dargestellten Hardwarefunktionalität (5) zugeordnet wird.

4. Verfahren nach einem der Ansprüche 1 bis 3, **dadurch gekennzeichnet, dass** die zu einem selektierten Anschluss (8) der externen I/O-Schnittstelle (7) ausgewählte Hardwarefunktionalität (5) automatisch unter Verwendung der in der Datenbasis hinterlegten Spezifikation des selektierten Anschlusses (8) der externen I/O-Schnittstelle (7) konfiguriert wird.

5. Verfahren nach einem der Ansprüche 1 bis 4, **dadurch gekennzeichnet, dass** nach einer Änderung der Spezifikation der Anschlüsse (8) und/oder der Eigenschaften (9) der Anschlüsse (8) der externen I/O-Schnittstelle (7) bei bereits wenigstens einer vorhandenen Zuordnungen eines Anschlusses (8) der externen I/O-Schnittstelle (7) zu einer Hardwarefunktionalität (5) des I/O-Geräts (4) die bereits vorhandene Zuordnung rechnergestützt auf Grundlage der in der Datenbasis hinterlegten geänderten Spezifikation auf funktionale Widerspruchsfreiheit hin untersucht wird und ermittelte Widersprüche angezeigt werden.

6. Verfahren nach einem der Ansprüche 1 bis 5, **dadurch gekennzeichnet, dass** mindestens ein I/O-Zugriffspunkt (12) eines mathematischen Modells (13) dargestellt wird und eine ausgewählte und dargestellte Hardwarefunktionalität (5) des I/O-Geräts (4) einem der dargestellten I/O-Zugriffspunkte (12) des mathematischen Modells (13) zugeordnet wird.

7. Verfahren nach einem der Ansprüche 1 bis 6, **dadurch gekennzeichnet, dass** Informationen über die Hardwarefunktionalitäten (5) des I/O-Geräts (4) und/oder Informationen über die Anschlüsse (8) und die Eigenschaften (9) der
Anschlüsse (8) der externen I/O-Schnittstelle (7) des externen Geräts (6) aus einer weiteren Datenbasis erhalten werden, ohne dass das I/O-Gerät (6) und/oder die externe I/O-Schnittstelle (7) des externen I/O-Geräts (6) selbst vorhanden sind.

8. Konfigurationseinrichtung (20) zur Konfiguration eines Steuerungssystems (2) zwecks rechnergestützter Erzeugung mindestens eines Teils eines ausführbaren Steuerungsprogramms (1) zur Steuerung des Steuerungssystems (2), wobei das Steuerungssystem (2) mindestens eine elektronische Rechnereinheit (3) und mindestens ein der Rechnereinheit (3) zugeordnetes I/O-Gerät (4) aufweist, wobei das I/O-Gerät (4) Hardwarefunktionalitäten (5) umfasst und das Steuerungssystem (2) über das I/O-Gerät (4) zum Anschluss an ein externes Gerät (6) mit einer externen I/O-Schnittstelle (7) geeignet ist, wobei die Konfigurationseinrichtung (20) mindestens eine Anzeigevorrichtung, mindestens eine Eingabevorrichtung und mindestens eine Speichervorrichtung zur Speicherung einer Datenbasis aufweist,
**dadurch gekennzeichnet,**
**dass** die Konfigurationseinrichtung so ausgestaltet ist, dass mit ihr das Verfahren gemäß einem der Ansprüche 1 bis 7 durchgeführt werden kann.

9. Konfigurationseinrichtung nach Anspruch 8, **dadurch gekennzeichnet, dass** mittels der Anzeigevorrichtung die Anschlüsse (8) der externen I/O-Schnittstelle (7) rechnergestützt in einem Extern-Konfigurationsfeld (10) auswählbar angezeigt werden, insbesondere durch Blöcke (21) nach Art eines Blockschaltbildes, wobei die Blöcke (21) insbesondere nebeneinander in einer Reihe angeordnet sind.

10. Konfigurationseinrichtung nach Anspruch 8 oder 9, **dadurch gekennzeichnet, dass** die Auswahl eines Anschlusses (8) der externen I/O-Schnittstelle (7) durch die Eingabevorrichtung erfolgt und die Hardwarefunktionalitäten (5), die funktional widerspruchsfrei mit der gespeicherten Spezifikation der Anschlüsse (8) und der Eigenschaften (9) der Anschlüsse (8) der externen I/O-Schnittstelle (7) vereinbar sind, in einem Auswahlfeld (22) zur Auswahl mit der Eingabevorrichtung auswählbar angezeigt sind.

11. Konfigurationseinrichtung nach einem der Ansprüche 8 bis 10, **dadurch gekennzeichnet, dass** mittels der Anzeigevorrichtung ausgewählte Hardwarefunktionalitäten (5) des I/O-Geräts (4) in einem Funktionskonfigurationsfeld (11) angezeigt werden, insbesondere durch Blöcke (23) nach Art eines Blockschaltbildes, wobei die Blöcke (23) insbesondere nebeneinander in einer Reihe angeordnet sind, bevorzugt parallel zu den Anschlüsse (8) der externen I/O-Schnittstelle (7).

12. Konfigurationseinrichtung nach einem der Ansprüche 8 bis 11, **dadurch gekennzeichnet, dass** wenigstens ein Anschluss (8) der externen I/O-Schnittstelle (7) im Extern-Konfigurationsfeld (10) einer Hardwarefunktionalität (5) des I/O-Geräts (4) des Steuerungssystems (2) im Funktionskonfigurationsfeld (11) durch ein graphisches Zuordnungsmittel zugeordnet wird, insbesondere durch eine Signallinie (24).

13. Konfigurationseinrichtung nach einem der Ansprüche 8 bis 12, **dadurch gekennzeichnet, dass** mittels der Anzeigevorrichtung wenigstens ein I/O-Zugriffspunkt (12) eines mathematischen Modells (13) in einem Modellkonfigurationsfeld (25) dargestellt wird, insbesondere durch Blöcke (26) nach Art eines Blockschaltbildes, wobei die Blöcke (26) insbesondere nebeneinander in einer Reihe angeordnet sind, bevorzugt parallel zu den ausgewählten und dargestellten Hardwarefunktionalitäten (5) des I/O-Geräts (4).

14. Konfigurationseinrichtung nach Anspruch 13, **dadurch gekennzeichnet, dass** wenigstens ein in dem Modellkonfigurationsfeld (25) dargestellter I/O-Zugriffspunkt (12) des mathematischen Modells (13) einer ausgewählten und in dem Funktionskonfigurationsfeld (11) ausgewählten und dargestellten Hardwarefunktionalität (5) des I/O-Geräts (4) zuordenbar ist, insbesondere durch graphische Zuordnungsmittel, bevorzugt durch eine Signallinie (24).
